(19) Europäisches Patentamt
European Patent Office
Office européen des brevets

(11) EP 4 700 049 A1

(12) EUROPEAN PATENT APPLICATION
published in accordance with Art. 153(4) EPC

(43) Date of publication:
25.02.2026 Bulletin 2026/09

(21) Application number: 24792753.6

(22) Date of filing: 19.04.2024

(51) International Patent Classification (IPC):
*C08F 8/12* (2006.01) *C04B 24/26* (2006.01)
*C08F 8/48* (2006.01) *C08F 216/06* (2006.01)
*C09D 5/00* (2006.01) *C09D 129/04* (2006.01)

(52) Cooperative Patent Classification (CPC):
C04B 24/26; C08F 8/12; C08F 8/48; C08F 216/06; C09D 5/00; C09D 129/04

(86) International application number:
PCT/JP2024/015533

(87) International publication number:
WO 2024/219481 (24.10.2024 Gazette 2024/43)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 19.04.2023 JP 2023068342

(71) Applicant: Kuraray Co., Ltd.
Kurashiki-shi, Okayama 710-0801 (JP)

(72) Inventors:
- HAMA, Kenichiro
  Kurashiki-shi, Okayama 710-0801 (JP)
- AMANO, Yusuke
  Kurashiki-shi, Okayama 710-0801 (JP)

(74) Representative: Müller-Boré & Partner
Patentanwälte PartG mbB
Friedenheimer Brücke 21
80639 München (DE)

# (54) VINYL ALCOHOL POLYMER, VINYL-ALCOHOL-POLYMER-CONTAINING AQUEOUS SOLUTION, COATING MATERIAL, AND CEMENT ADMIXTURE

(57) A vinyl alcohol-based polymer having an aqueous solution viscosity X (cp) at 20°C and a shear rate of 1 (1/s) of an aqueous solution in an aqueous solution state having a content rate of the vinyl alcohol-based polymer of 1.5% by mass and a pH of 4 at 20°C, and an aqueous solution viscosity Y (cp) at 20°C and a shear rate of 1 (1/s) of an aqueous solution in an aqueous solution state having a content rate of the vinyl alcohol-based polymer of 1.5% by mass and a pH of 10 at 20°C, that satisfy the following expression (1): $1.5 < Y/X < 1,500$ (1).

EP 4 700 049 A1

## Description

Technical Field

The present invention relates to a vinyl alcohol-based polymer, and a vinyl alcohol-based polymer-containing aqueous solution, a coating material, and a cement admixture, containing the vinyl alcohol-based polymer.

Background Art

A vinyl alcohol-based polymer has excellent film characteristics (such as a mechanical strength, an oil resistance, a film forming capability, and an oxygen gas barrier capability) derived from the hydrophilicity and the high crystallinity thereof. Due to the characteristics, accordingly, the vinyl alcohol-based polymer has been widely applied to raw materials of a viscosity modifier (thickener), an adhesive, a paper coating material, a fiber processing material, a binder, an emulsion stabilizer, a film, and fibers. Furthermore, for enhancing the capabilities of the vinyl alcohol-based polymer according to the applications, a modified vinyl alcohol-based polymer is being developed through introduction of a functional group, control of the crystallinity, and the like.

For example, in the application as a viscosity modifier (thickener), even the ordinary vinyl alcohol-based polymer exhibits an excellent thickening effect through the interaction among hydroxy groups of the vinyl alcohol-based polymer. For addressing the demand of a higher aqueous solution viscosity, however, there are proposals of a modified vinyl alcohol-based polymer having a small amount of a hydrophobic group, such as a saturated hydrocarbon group, introduced thereto (see PTLs 1 and 2). The modified vinyl alcohol-based polymers exhibit a higher thickening effect through the interaction among the hydrophobic groups in an aqueous solution, in addition to the interaction among the hydroxy groups.

Citation List

Patent Literatures

PTL 1: JP 2008-291120 A
PTL 2: WO 2019/189402

Summary of Invention

Technical Problem

The modified vinyl alcohol-based polymers described in PTLs 1 and 2 exhibit an excellent thickening capability at a low concentration. However, in delivering the modified vinyl alcohol-based polymer to the target to be imparted with viscosity (for example, an emulsion) in the process of mixing the modified vinyl alcohol-based polymer with the target, it is necessary that a modified vinyl alcohol-based polymer solution to be delivered is prepared to have a high concentration in consideration of the reduction of the concentration of the modified vinyl alcohol-based polymer after mixing.

As a result of investigation by the present inventors, it has been found that the modified vinyl alcohol-based polymers have problems in handleability, for example, the polymer cannot be delivered due to the high viscosity at a high concentration, or cannot be dissolved anyway.

The present invention is to solve the problems, and to provide a vinyl alcohol-based polymer that is capable of providing a vinyl alcohol-based polymer aqueous solution capable of readily changing viscosity largely, a vinyl alcohol-based polymer aqueous solution that is capable of readily changing viscosity largely, and a coating material and a cement admixture containing the vinyl alcohol-based polymer.

Solution to Problem

The present invention encompasses the following inventions.

[1] A vinyl alcohol-based polymer having

an aqueous solution viscosity X (cp) at 20°C and a shear rate of 1 (1/s) of an aqueous solution in an aqueous solution state having a content rate of the vinyl alcohol-based polymer of 1.5% by mass and a pH of 4 at 20°C, and an aqueous solution viscosity Y (cp) at 20°C and a shear rate of 1 (1/s) of an aqueous solution in an aqueous

solution state having a content rate of the vinyl alcohol-based polymer of 1.5% by mass and a pH of 10 at 20°C, that satisfy the following expression (1):

$$1.5 < Y/X < 1{,}500 \qquad (1)$$

[2] The vinyl alcohol-based polymer according to the item [1], in which the aqueous solution viscosity Y is 20 cp or more.

[3] The vinyl alcohol-based polymer according to the item [1] or [2], in which the aqueous solution viscosity Y (cp) and an aqueous solution viscosity Z (cp) at 20°C and a shear rate of 100 (1/s) of an aqueous solution in an aqueous solution state having a content rate of the vinyl alcohol-based polymer of 1.5% by mass and a pH of 10 at 20°C satisfy the following expression (2):

$$1.5 < Y/Z < 100 \qquad (2)$$

[4] The vinyl alcohol-based polymer according to any of the items [1] to [3], in which the vinyl alcohol-based polymer contains a constitutional unit (A) having a lactone ring.

[5] The vinyl alcohol-based polymer according to any of the items [1] to [4], in which the vinyl alcohol-based polymer contains a constitutional unit (B) having an ionic group.

[6] The vinyl alcohol-based polymer according to any of the items [1] to [5], in which the vinyl alcohol-based polymer contains a constitutional unit (C) having a hydrophobic group including a hydrocarbon having 3 or more carbon atoms.

[7] The vinyl alcohol-based polymer according to any of the items [1] to [3], in which the vinyl alcohol-based polymer contains a constitutional unit (A) having a lactone ring, a constitutional unit (B) having an ionic group, and a constitutional unit (C) having a hydrophobic group including a hydrocarbon having 3 or more carbon atoms, and has a content rate (a) of the constitutional unit (A), a content rate (b) of the constitutional unit (B), and a content rate (c) of the constitutional unit (C), with respect to all constitutional units of the vinyl alcohol-based polymer, a number of carbon atoms (d) of the hydrophobic group in the constitutional unit (C), and a number of the ionic group (e) in the constitutional unit (B) that satisfy the following expression (3):

$$5 < (c\times(d-3)^2)/(a+b\times e) < 95 \qquad (3)$$

[8] A vinyl alcohol-based polymer-containing aqueous solution containing the vinyl alcohol-based polymer according to any of the items [1] to [7].

[9] The vinyl alcohol-based polymer-containing aqueous solution according to the item [8], in which the vinyl alcohol-based polymer aqueous solution has a content rate of the vinyl alcohol-based polymer of 1 to 3% by mass and a pH of 7 or more at 20°C, and has an aqueous solution viscosity at a shear rate of 1 (1/s) at 20°C of 20 to 1,000,000 cp.

[10] The vinyl alcohol-based polymer-containing aqueous solution according to the item [8], in which the vinyl alcohol-based polymer aqueous solution has a content rate of the vinyl alcohol-based polymer of 1 to 3% by mass and a pH of less than 7 at 20°C, and has an aqueous solution viscosity at a shear rate of 1 (1/s) at 20°C of 20 to 100,000 cp.

[11] A coating material containing the vinyl alcohol-based polymer according to any of the items [1] to [7].

[12] A cement admixture containing the vinyl alcohol-based polymer according to any of the items [1] to [7].

Advantageous Effects of Invention

The present invention can provide a vinyl alcohol-based polymer that is capable of providing a vinyl alcohol-based polymer aqueous solution capable of readily changing viscosity largely, a vinyl alcohol-based polymer aqueous solution that is capable of readily changing viscosity largely, and a coating material and a cement admixture containing the vinyl alcohol-based polymer.

Description of Embodiments

One example of an embodiment to which the present invention is applied is described below. Other embodiments that conform to the concept of the present invention are encompassed by the present invention.

In the description herein, the characteristic feature capable of readily changing viscosity largely is referred to as a "viscosity changing capability".

In the description herein, the "aqueous solution state" means a state in which other components than the solvent (water) are dissolved or dispersed in water.

[Vinyl Alcohol-based polymer]

The vinyl alcohol-based polymer of the present invention is a vinyl alcohol-based polymer having

an aqueous solution viscosity X (cp) at 20°C and a shear rate of 1 (1/s) of an aqueous solution in an aqueous solution state having a content rate of the vinyl alcohol-based polymer of 1.5% by mass and a pH of 4 at 20°C, and
an aqueous solution viscosity Y (cp) at 20°C and a shear rate of 1 (1/s) of an aqueous solution in an aqueous solution state having a content rate of the vinyl alcohol-based polymer of 1.5% by mass and a pH of 10 at 20°C,
that satisfy the following expression (1):

$$1.5 < Y/X < 1{,}500 \qquad (1)$$

The vinyl alcohol-based polymer according to the present invention has a viscosity ratio (Y/X) that is as large as more than 1.5. Therefore, the vinyl alcohol-based polymer according to the present invention can readily change the viscosity largely by changing the pH of the aqueous solution of the vinyl alcohol-based polymer. Accordingly, in delivering the aqueous solution of the vinyl alcohol-based polymer through piping or the like, the pH thereof is lowered by adding an acid thereto, thereby readily allowing the aqueous solution to have a lower viscosity, and thus the solution can be smoothly delivered. In the use thereof as a thickener or the like, the pH thereof is increased by adding an alkali thereto, thereby readily allowing the aqueous solution to have a higher viscosity.

<Viscosity Ratio (Y/X)>

The viscosity ratio (Y/X) is more than 1.5 and less than 1,500. In the case where the ratio is 1.5 or less, the viscosity of the aqueous solution of the vinyl alcohol-based polymer cannot be readily changed, and therefore both the thickening capability and the solution delivering capability cannot be achieved by changing the pH. In the case where the ratio is 1,500 or more, the viscosity is drastically changed through a slight change in pH, and thus the viscosity is difficult to regulate, which deteriorates the convenience.

From the standpoints, the viscosity ratio (Y/X) is preferably more than 1.5 and 1,000 or less, more preferably more than 1.5 and 800 or less, further preferably more than 1.5 and 500 or less, still further preferably 3.0 or more and 500 or less, still more further preferably 5.0 or more and 500 or less, even further preferably 5.0 or more and 300 or less, even still further preferably 10 or more and 300 or less, even still more further preferably 15 or more and 300 or less, and yet further preferably 25 or more and 300 or less.

There is a tendency of increasing the viscosity ratio (Y/X) by introducing a constitutional unit having an aqueous group having a large number of carbon atoms, increasing the content rate of the constitutional unit having a hydrophobic group, increasing the polymerization degree, increasing the content rate of the constitutional unit having an ionic group, or decreasing the vinyl ester monomer unit. There is a tendency of decreasing the viscosity ratio (Y/X) by introducing a constitutional unit having a hydrophobic group having a small number of carbon atoms, decreasing the content rate of the constitutional unit having a hydrophobic group, decreasing the polymerization degree, decreasing the content rate of the constitutional unit having an ionic group, or increasing the vinyl ester monomer unit.

<Viscosity X>

The viscosity X (cp) is preferably 6,000 cp or less from the standpoint of enhancing the solution delivering capability of the aqueous solution of the vinyl alcohol-based polymer, and the like. The viscosity X (cp) is preferably 1 cp or more from the standpoint of the thickening capability of the vinyl alcohol-based polymer aqueous solution after changing the viscosity. From the standpoints, the viscosity X (cp) is preferably 1 to 6,000, more preferably 10 to 5,500, further preferably 20 to 5,500, still further preferably 25 to 5,500, still more further preferably 100 to 5,500, even further preferably 100 to 3,000, even still further preferably 100 to 2,500, and even still more further preferably 130 to 2,500.

There is a tendency of increasing the viscosity X (cp) by modifying the ionic group having a high acidity, increasing the polymerization degree, or decreasing the vinyl ester monomer unit. There is a tendency of decreasing the viscosity X (cp) by decreasing the polymerization degree, or increasing the vinyl ester monomer unit.

<Viscosity Y>

The viscosity Y (cp) is preferably 20 cp or more from the standpoint of the viscosity changing capability and the thickening capability of the aqueous solution of the vinyl alcohol-based polymer. The viscosity Y (cp) is preferably 500,000 cp or less from the standpoint of the handleability. From the standpoints, the viscosity X (cp) is preferably 20 to 500,000,

more preferably 100 to 300,000, further preferably 100 to 200,000, still further preferably 200 to 200,000, still more further preferably 500 to 200,000, even further preferably 2,000 to 200,000, even still further preferably 5,000 to 200,000, even still more further preferably 6,000 to 200,000, and yet further preferably 10,000 to 150,000.

There is a tendency of increasing the viscosity Y (cp) by introducing a constitutional unit having a hydrophobic group having a large number of carbon atoms, increasing the content rate of the constitutional unit having a hydrophobic group, increasing the polymerization degree, increasing the content rate of the constitutional unit having an ionic group, or decreasing the vinyl ester monomer unit. There is a tendency of decreasing the viscosity Y (cp) by introducing a constitutional unit having a hydrophobic group having a small number of carbon atoms, decreasing the content rate of the constitutional unit having a hydrophobic group, decreasing the polymerization degree, decreasing the content rate of the constitutional unit having an ionic group, or increasing the vinyl ester monomer unit.

<Viscosity Ratio (Y/Z)>

The aqueous solution viscosity Y (cp) and an aqueous solution viscosity Z (cp) at 20°C and a shear rate of 100 (1/s) of an aqueous solution in an aqueous solution state having a content rate of the vinyl alcohol-based polymer of 1.5% by mass and a pH of 10 at 20°C preferably satisfy the following expression (2):

$$1.5 < Y/Z < 100 \qquad (2)$$

In the case where the viscosity ratio (Y/Z) is more than 1.5, excellent thixotropy can be obtained. In the case where the viscosity ratio (Y/Z) is less than 100, an excellent handleability can be obtained.

From the standpoints, the viscosity ratio (Y/Z) is more preferably 2.0 to 80, further preferably 5 to 80, still further preferably 10 to 80, still more further preferably 20 to 80, even further preferably 20 to 60, and even still further preferably 20 to 50.

There is a tendency of increasing the viscosity ratio (Y/Z) by introducing a constitutional unit having a hydrophobic group having a large number of carbon atoms, increasing the content rate of the constitutional unit having a hydrophobic group, increasing the content rate of the constitutional unit having an ionic group, or decreasing the vinyl ester monomer unit. There is a tendency of decreasing the viscosity ratio (Y/Z) by introducing a constitutional unit having a hydrophobic group having a small number of carbon atoms, decreasing the content rate of the constitutional unit having a hydrophobic group, decreasing the content rate of the constitutional unit having an ionic group, or increasing the vinyl ester monomer unit.

<Viscosity Z>

The viscosity Z (cp) is preferably 10,000 cp or less from the standpoint of enhancing the solution delivering capability of the aqueous solution of the vinyl alcohol-based polymer. The viscosity Z (cp) is preferably 10 cp or more from the standpoint of the thickening capability. From the standpoints, the viscosity Z (cp) is preferably 10 to 10,000, more preferably 50 to 10,000, further preferably 100 to 10,000, still further preferably 100 to 6,000, still more further preferably 100 to 4,000, even further preferably 500 to 4,000, and even still further preferably 1,000 to 3,000.

There is a tendency of increasing the viscosity Z (cp) by introducing a constitutional unit having a hydrophobic group having a large number of carbon atoms, increasing the content rate of the constitutional unit having a hydrophobic group, or increasing the content rate of the constitutional unit having an ionic group. There is a tendency of decreasing the viscosity Z (cp) by introducing a constitutional unit having a hydrophobic group having a small number of carbon atoms, decreasing the content rate of the constitutional unit having a hydrophobic group, or decreasing the content rate of the constitutional unit having an ionic group.

The aqueous solution viscosity X (cp), the aqueous solution viscosity Y (cp), the aqueous solution viscosity Z (cp), and the aqueous solution viscosity W (cp) can be measured with a rheometer, and in more detail, can be measured by the method described in the examples.

<pH Modifier>

The method of modifying the pH of the aqueous solution of the vinyl alcohol-based polymer is not particularly limited, and it is preferred to add an acidic compound or a basic compound to the aqueous solution.

Examples of the acidic compound include an inorganic acid, such as hydrochloric acid, sulfuric acid, phosphoric acid, nitric acid, and hydrofluoric acid; and an organic acid, such as formic acid, acetic acid, trichloroacetic acid, propionic acid, butanoic acid, chloroacetic acid, methanesulfonic acid, p-toluenesulfonic acid, trifluoromethanesulfonic acid, and citric acid. Among these, p-toluenesulfonic acid, citric acid, hydrochloric acid, nitric acid, sulfuric acid, and acetic acid are

preferred, and citric acid is more preferred. One kind of the acidic compound may be used alone, or two or more kinds thereof may be used in combination.

Examples of the basic compound include an alkali metal hydride, such as sodium hydride and potassium hydride; an alkali metal hydroxide, such as sodium hydroxide and potassium hydroxide; an alkali metal carbonate, such as sodium carbonate and potassium carbonate; an alkali metal hydrogencarbonate, such as sodium hydrogencarbonate and potassium hydrogencarbonate; a tertiary amine, such as triethylamine, tributylamine, and diazabicyclo[2.2.2]octane; and a nitrogen-containing heterocyclic aromatic compound, such as pyridine and 2,6-lutidine. Among these, an alkali metal hydroxide is preferred, and sodium hydroxide is more preferred. One kind of the basic compound may be used alone, or two or more kinds thereof may be used in combination.

<Constitutional Unit of Vinyl Alcohol-based polymer>

(Constitutional Unit (A) having Lactone Ring)

The vinyl alcohol-based polymer according to the present invention preferably contains a constitutional unit (A) having a lactone ring.

In the case where the vinyl alcohol-based polymer according to the present invention has a lactone ring, the vinyl alcohol-based polymer is prevented from becoming lumps through melting and adhesion of the surface thereof, and as a result, the vinyl alcohol-based polymer is prevented from becoming difficult to dissolve when forming into an aqueous solution.

A lactone ring can be obtained, for example, by copolymerizing a vinyl ester and a (meth)acrylate ester, followed by saponification.

Specific examples of the vinyl ester are the same as the specific examples of the vinyl ester monomer unit described later. The specific examples of the (meth)acrylate ester are the same as the specific examples of the acrylate ester and the methacrylate ester in the constitutional unit (B) having an ionic group described later.

The constitutional unit (A) having a lactone ring is preferably at least one kind selected from the group consisting of a unit represented by the following structural formula (1), a unit represented by the following structural formula (2), and a unit represented by the following structural formula (3), more preferably at least one kind selected from the group consisting of a unit represented by the structural formula (1) and a unit represented by the structural formula (2), and further preferably a unit represented by the structural formula (1).

In the structural formulae (1), (2), and (3), * represents a bonding site bonded to the adjacent constitutional unit.

In the structural formulae (2) and (3), R represents a methyl group, a carboxy group, or a salt of a carboxy group.

[Chem 1]

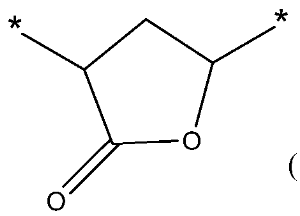
(1)

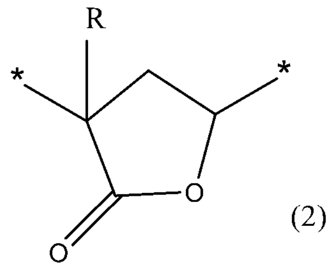
(2)

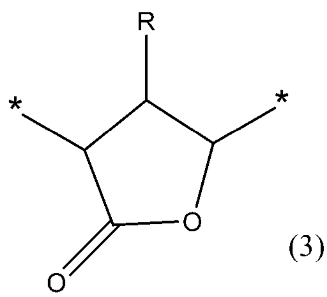
(3)

(Constitutional Unit (B) having Ionic Group)

The vinyl alcohol-based polymer according to the present invention preferably contains a constitutional unit (B) having an ionic group.

Due to the constitutional unit (B) having an ionic group contained in the vinyl alcohol-based polymer according to the present invention, the solubility thereof in water in forming an aqueous solution is enhanced, and simultaneously in the case where the pH of the aqueous solution is decreased, the viscosity thereof is decreased through the formation of the lactone ring structure by reacting with the hydroxy group in the vinyl alcohol-based polymer, or through the protonation of the ionic group, thereby achieving the smooth liquid delivery of the aqueous solution.

The ionic group is not particularly limited, examples thereof include a carboxy group, a salt of a carboxy group, a sulfo group, a salt of a sulfo group, an amino group, a salt of an amino group, and a salt of a quaternary ammonium group. The salts are preferably an alkali metal salt, and more preferably a sodium salt, from the standpoint of the industrial availability and the cost. One kind of the ionic group may be used alone, or two or more kinds thereof may be used. A carboxy group and a salt of a carboxy group are preferred from the standpoint of the viscosity changing capability and the acidity.

Examples of the monomer constituting the constitutional unit (B) having an ionic group include a monomer having a carboxy group or a salt thereof, an ester of a monomer having a carboxy group, a monomer having a sulfo group or a salt thereof, a monomer having an amino group or a salt thereof, and a monomer having a salt of a quaternary ammonium group. One kind of the monomer may be used alone, or two or more kinds thereof may be used. Among these, a monomer having a carboxy group or a salt thereof and an ester of a monomer having a carboxy group are preferred from the standpoint of the viscosity changing capability and the acidity.

The constitutional unit (B) having an ionic group may be a constitutional unit represented by the structural formula (6) described later.

<<Monomer having Carboxy Group or Salt Thereof and Ester of Monomer having Carboxy Group>>

It suffices that the monomer having a carboxy group or a salt thereof and the ester of a monomer having a carboxy group are capable of being copolymerized with the vinyl ester monomer, and allow the carboxy group or a salt thereof to exist in the vinyl alcohol-based polymer after saponification, and examples thereof include acrylic acid and a salt thereof; an acrylate ester, such as methyl acrylate, ethyl acrylate, n-propyl acrylate, and isopropyl acrylate; methacrylic acid and a salt thereof; a methacrylate ester, such as methyl methacrylate, ethyl methacrylate, n-propyl methacrylate, and isopropyl methacrylate; maleic acid and a salt thereof; a maleate ester, such as monomethyl maleate, dimethyl maleate, monoethyl maleate, and diethyl maleate; itaconic acid and a salt thereof; an itaconate ester, such as monomethyl itaconate, dimethyl itaconate, monoethyl itaconate, and diethyl itaconate; fumaric acid and a salt thereof; a fumarate ester, such as monomethyl fumarate, dimethyl fumarate, monoethyl fumarate, and diethyl fumarate; maleic anhydride, itaconic anhydride, and a derivative thereof; and a formyl carboxylic acid and a salt thereof, such as phthalaldehydic acid, isophthalaldehydic acid, terephthalaldehydic acid, glyoxylic acid, formyl acetic acid, and formyl propanoic acid. One kind thereof may be used alone, or two or more kinds thereof may be used. Among these, methyl acrylate, acrylic acid, maleic acid, monomethyl maleate, dimethyl maleate, itaconic acid, monomethyl itaconate, phthalaldehydic acid, isophthalaldehydic acid, terephthalaldehydic acid, glyoxylic acid, and salts thereof are preferred, and methyl acrylate, acrylic acid, and salts thereof are more preferred, from the standpoint of the reactivity and the industrial availability.

<<Monomer having Sulfo Group and Salt Thereof>>

The monomer having a sulfo group or a salt thereof is not particularly limited, and examples thereof include an unsaturated sulfonic acid or a salt of the unsaturated sulfonic acid, such as vinyl sulfonic acid, allyl sulfonic acid, (meth)acrylic sulfonic acid, styrenesulfonic acid, benzaldehydesulfonic acid (e.g., o-benzaldehydesulfonic acid, m-benzaldehydesulfonic acid, p-benzaldehydesulfonic acid), 2-acrylamido-2-phenylprropanesulfonic acid, 2-acrylamido-2-methylpropanesulfonic acid (AMPS); and an unsaturated disulfonic acid or a salt of the unsaturated disulfonic acid, such as benzaldehyde-2,4-disulfonic acid. One kind of the monomer having a sulfo group or a salt thereof may be used alone, or two or more kinds thereof may be used. Amont these, o-benzaldehydesulfonic acid, 2-acrylamido-2-methylpropanesulfonic acid (AMPS), benzaldehyde-2,4-disulfonic acid, and salts thereof are preferred, benzaldehydesulfonic acid and a salt thereof are more preferred, from the standpoint of the reactivity and the industrial availability.

<<Monomer having Amino Group or Salt Thereof>>

Examples of the monomer having an amino group or a salt thereof include monomers having an amino group ($-NH_2$) or a salt thereof, a methylamino group ($-NHCH_3$) or a salt thereof, a dimethylamino group ($-N(CH_3)_2$) or a salt

thereof, a diethylamino group (-$N(CH_2CH_3)_2$) or a salt thereof, and a diphenylamino group (-$NPh_2$) or a salt thereof, and examples thereof include an unsaturated amine, such as vinyldimethylamine, vinyldiethylamine, vinyldiphenylamine, allyldimethylamine, methacryldiethylamine, and salts thereof. One kind of the monomer having an amino group or a salt thereof may be used alone, or two or more kinds thereof may be used. Among these, vinyldimethylamine is preferred from the standpoint of the industrial availability.

<<Monomer having Salt of Quaternary Ammonium Group>>

In the description herein, the "quaternary ammonium group" means a group having one nitrogen atom and four carbon atoms bonded thereto to form a cation. However, it is not necessary that the four carbon atoms are different carbon atoms, but the case where some of them are the same carbon atom is encompassed.

The monomer having a salt of a quaternary ammonium group is not particularly limited, as long as having a salt of a quaternary ammonium group, such as quaternary ammonium chloride (-$N+(CH_3)_3Cl$-), and examples thereof include 3-(methacrylamido)propyltrimethylammonium chloride (MAPTAC). One kind of the monomer having a salt of a quaternary ammonium group may be used alone, or two or more kinds thereof may be used. Among these, 3-(methacrylamido) propyltrimethylammonium chloride (MAPTAC) is preferred from the standpoint of the industrial availability.

<<Constitutional Unit represented by Structural Formula (6)>>

The constitutional unit (B) having an ionic group may be a constitutional unit represented by the following formula (6).

[Chem 2]

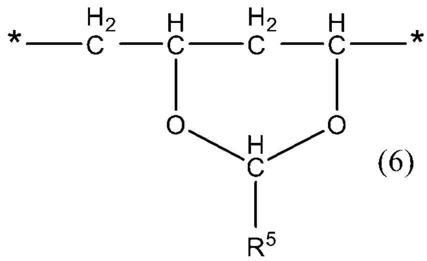

(6)

In the structural formula (6), * represents a bonding site bonded to the adjacent constitutional unit.

In the structural formula (6), $R^5$ represents an ionic group. The ionic group is preferably the aforementioned ionic groups, and more preferably a carboxy group or a salt thereof.

(Constitutional Unit (C) having Hydrophobic Group including Hydrocarbon having 3 or more Carbon Atoms)

The vinyl alcohol-based polymer according to the present invention preferably contains a constitutional unit (C) having a hydrophobic group including a hydrocarbon having 3 or more carbon atoms.

The vinyl alcohol-based polymer according to the present invention may contain a constitutional unit (C) having a hydrophobic group including a hydrocarbon having 3 or more carbon atoms, and on standing, physical crosslinking is formed through interaction among the hydrophobic groups, so as to enhance the thickening capability. In application of a shear force through stirring or the like, the physical crosslinking is temporarily broken to decrease the viscosity. According to the mechanism, the vinyl alcohol-based polymer according to the present invention exhibits thixotropy.

Examples of the constitutional unit (C) include a constitutional unit represented by the following structural formula (4) and a constitutional unit represented by the following structural formula (5).

[Chem 3]

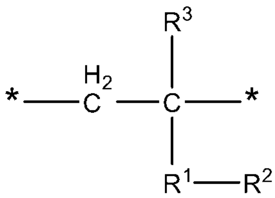

(4)

In the structural formula (4), * represents a bonding site bonded to the adjacent constitutional unit.

In the structural formula (4), $R^1$ represents a single bond, an amide bond (-C(=O)-NH-), or an ether bond (-O-), $R^2$ represents a hydrophobic group including a hydrocarbon having 3 or more carbon atoms, and preferably an alkyl or alkenyl group having 3 or more carbon atoms, and $R^3$ represents hydrogen or a methyl group.

The number of carbon atoms of the alkyl or alkenyl group is preferably 3 to 25. In the case where the number of carbon atoms is 3 or more, the thixotropy is favorably exhibited. In the case where the number of carbon atoms is 25 or less, the vinyl alcohol-based polymer is favorably dissolved in water.

From the standpoints, the number of carbon atoms of the alkyl or alkenyl group is more preferably 4 to 25, further preferably 6 to 20, still further preferably 6 to 12, and still more further preferably 10 to 12.

The number of carbon atoms of the alkyl or alkenyl group may be linear or branched, and is preferably linear from the aforementioned standpoints.

The alkyl group is preferably a hexyl group, an octyl group, a decyl group, a dodecyl group, or the like.

[Chem 4]

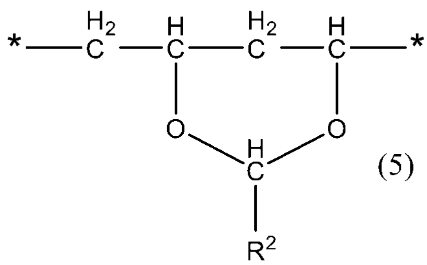

(5)

In the structural formula (5), * represents a bonding site bonded to the adjacent constitutional unit.

In the structural formula (5), $R^2$ is the same as $R^2$ in the structural formula (4).

The structural formula (5) can be formed by bonding an aldehyde or a derivative thereof to the two hydroxy groups bonded to the two carbon atoms bonded to both ends of the methylene group of the vinyl alcohol-based polymer.

The number of carbon atoms of the aldehyde or a derivative thereof is preferably 4 to 20. In the case where the number of carbon atoms is 4 or more, the thixotropy is favorably exhibited. In the case where the number of carbon atoms is 20 or less, the vinyl alcohol-based polymer is favorably dissolved in water. From the standpoints, the number of carbon atoms thereof is more preferably 4 to 16, further preferably 6 to 14, and still further preferably 10 to 12.

The aldehyde is preferably 1-butanal, isobutyraldehyde, tert-butyraldehyde, pentanal, 3-methylbutanal, 1-hexanal, 1-heptanal, 1-octanal, 2-ethylhexanal, 1-nonanal, 1-decanal, 3,7-dimethyl-1-octanal, 1-undecanal, 1-dodecanal, 3-methyl-3-butenal, citral, citronellal, or 7-octenal, and more preferably at least one kind selected from dodecanal, decanal, and hexanal.

(Vinyl Alcohol Monomer Unit)

The vinyl alcohol-based polymer according to the present invention preferably contains a vinyl alcohol monomer unit.

(Vinyl Ester Monomer Unit)

The vinyl alcohol-based polymer according to the present invention preferably contains a vinyl ester monomer unit.

Examples of the vinyl ester monomer unit include vinyl acetate, vinyl formate, vinyl propionate, vinyl caprylate, and vinyl versatate. Among these, vinyl acetate is preferred from the industrial standpoint. One kind thereof may be used, or two or more kinds thereof may be used in combination.

The vinyl alcohol-based polymer of the present invention may further contain a constitutional unit other than the constitutional unit (A), the constitutional unit (B), the constitutional unit (C), the vinyl alcohol monomer unit, and the vinyl ester monomer unit, as long as exhibiting the effects of the present invention. Examples of the constitutional unit include a constitutional unit derived from an ethylenic unsaturated monomer capable of being copolymerized with the vinyl ester, and a constitutional unit after modification, such as acetalization. Examples of the ethylenic unsaturated monomer include an α-olefin compound, such as ethylene, propylene, n-butene, and isobutylene; a vinyl ether compound, such as methyl vinyl ether and ethyl vinyl ether; a vinyl cyanide compound, such as acrylonitrile and methacrylonitrile; a vinyl halide compound, such as vinyl chloride and vinyl fluoride; a vinylidene halide compound, such as vinylidene chloride and vinylidene fluoride; an allyl compound, such as allyl acetate and allyl chloride; and a vinyl silyl compound, such as

vinyltrimethoxisilane.

(Contents of Constitutional Units)

In the vinyl alcohol-based polymer according to the present invention, the content rate (a) of the constitutional unit (A) is preferably 0.1 to 10% by mol. In the case where the content rate thereof is 0.1% by mol or more, an excellent solubility thereof in water can be obtained. In the case where the content rate thereof is 10% by mol or less, an excellent effect derived from the constitutional units other than the constitutional unit (A) can be obtained.

From the standpoints, the content rate (a) of the constitutional unit (A) is more preferably 0.1 to 8.0% by mol, further preferably 0.1 to 6.0% by mol, still further preferably 1.0 to 6.0% by mol, still more further preferably 2.0 to 6.0% by mol, even further preferably 3.0 to 5.5% by mol, and even still further preferably 3.0 to 5.0% by mol.

In the vinyl alcohol-based polymer according to the present invention, the content rate (b) of the constitutional unit (B) is preferably 0.1 to 10% by mol. In the case where the content rate thereof is 0.1% by mol or more, the solubility thereof in water in forming an aqueous solution is enhanced, and simultaneously in the case where the pH of the aqueous solution is decreased, the viscosity thereof is decreased through the formation of the lactone ring structure by reacting with the hydroxy group in the vinyl alcohol-based polymer, or through the protonation thereof, thereby achieving the smooth liquid delivery of the aqueous solution. In the case where the content rate thereof is 10% by mol or less, an excellent effect derived from the constitutional units other than the constitutional unit (B) can be obtained.

From the standpoints, the content rate (b) of the constitutional unit (B) is more preferably 0.1 to 8.0% by mol, further preferably 0.1 to 6.0% by mol, still further preferably 1.0 to 6.0% by mol, still more further preferably 2.0 to 6.0% by mol, even further preferably 2.0 to 5.5% by mol, and even still further preferably 2.0 to 5.0% by mol.

In the vinyl alcohol-based polymer according to the present invention, the content rate (c) of the constitutional unit (C) is preferably 0.1 to 10% by mol. In the case where the content rate thereof is 0.1% by mol or more, the viscosity of the aqueous solution thereof can be enhanced. In the case where the content rate thereof is 10% by mol or less, an excellent effect derived from the constitutional units other than the constitutional unit (C) can be obtained.

From the standpoints, the content rate (c) of the constitutional unit (C) is more preferably 0.1 to 8.0% by mol, further preferably 0.5 to 8.0% by mol, still further preferably 1.2 to 8.0% by mol, still more further preferably 1.2 to 5.5% by mol, and even further preferably 1.2 to 3.0% by mol.

In the vinyl alcohol-based polymer according to the present invention, the content rate of the vinyl alcohol monomer unit is preferably 60 to 99% by mol. In the case where the content rate thereof is 60% by mol or more, an excellent effect derived from the water solubility can be obtained. In the case where the content rate thereof is 99% by mol or less, an excellent effect derived from the constitutional units other than the vinyl alcohol monomer unit can be obtained.

From the standpoints, the content rate of the vinyl alcohol monomer unit is more preferably 65 to 98% by mol, further preferably 70 to 97% by mol, still further preferably 75 to 97% by mol, and still more further preferably 77 to 96% by mol.

In the vinyl alcohol-based polymer according to the present invention, the content rate of the vinyl ester monomer unit is preferably 0.01 to 20% by mol. In the case where the content rate thereof is 0.01% by mol or more, an excellent storage stability of the aqueous solution can be obtained. In the case where the content rate thereof is 20% by mol or less, an excellent effect derived from the constitutional units other than the vinyl ester monomer unit can be obtained.

From the standpoints, the content rate of the vinyl ester monomer unit is more preferably 0.01 to 12.0% by mol, further preferably 0.05 to 5.0% by mol, still further preferably 0.05 to 1.0% by mol, and still more further preferably 0.05 to 0.5% by mol.

It is preferred that the vinyl alcohol-based polymer according to the present invention contains the constitutional unit (A) having a lactone ring, the constitutional unit (B) having an ionic group, and the constitutional unit (C) having a hydrophobic group including a hydrocarbon having 3 or more carbon atoms, and the content rate (a) of the constitutional unit (A), the content rate (b) of the constitutional unit (B), and the content rate (c) of the constitutional unit (C), with respect to all constitutional units of the vinyl alcohol-based polymer, the number of carbon atoms (d) of the hydrophobic group in the constitutional unit (C), and the number of the ionic group (e) in the constitutional unit (B) satisfy the following expression (3):

$$5 < (c\times(d-3)^2)/(a+b\times e) < 95 \qquad (3)$$

As for the number of carbon atoms (d) of the hydrophobic group in the constitutional unit (C), in the structural formula (4), the sum of the numbers of carbon atoms contained in $R^1$ and $R^2$ is designated as d, and in the structural formula (5), the sum of the number of carbon atoms of $R^2$ and the number of carbon atoms of the acetal moiety is designated as d.

In the middle term of the expression (3), $(c\times(d-3)^2)/(a+b\times e)$, the numerator, $(c\times(d-3)^2)$, is an index showing the extent of the interaction among the hydrophobic groups of the resin, whereas the denominator, $(a+b\times e)$, is an index of the solubility in water, and therefore, the middle term, $(c\times(d-3)^2)/(a+b\times e)$, is an index showing the balance between the

hydrophobicity and the hydrophilicity.

In the case where the middle term, $(c\times(d-3)^2)/(a+b\times e)$, is more than 5, an excellent effect of a thickening capability can be obtained. In the case where the middle term is less than 95, an excellent effect in which a high viscosity changing capability is obtained while retaining the solubility in water.

From the standpoints, the middle term, $(c\times(d-3)^2)/(a+b\times e)$, is more preferably 6 to 70, further preferably 10 to 60, still further preferably 10 to 55, still more further preferably 13 to 55, even further preferably 15 to 55, even still further preferably 15 to 50, even still more further preferably 15 to 45, and yet further preferably 15 to 40.

(Properties of Vinyl Alcohol-based polymer)

<<Modification Amount>>

The modification amount of the vinyl alcohol-based polymer according to the present invention is not particularly limited, and is preferably 0 to 30.0% by mol. In the case where the modification amount thereof is 30.0% by mol or less, an excellent effect derived from the vinyl alcohol-based polymer can be obtained. From the standpoint, the modification amount is more preferably 0 to 20.0% by mol, further preferably 0 to 15.0% by mol, still further preferably 0 to 10.0% by mol, and still more further preferably 0 to 8.0% by mol, may be 0 to 6.0% by mol, may be 0.1 to 8.0% by mol, and is even further preferably 0.1 to 6.0% by mol, and even still further preferably 1.0 to 6.0% by mol.

<<Polymerization Degree>>

The polymerization degree of the vinyl alcohol-based polymer according to the present invention is not particularly limited, and is preferably 100 to 5,000. In the case where the polymerization degree is 100 or more, an excellent aqueous solution viscosity can be obtained. In the case where the polymerization degree is 5,000 or less, the polymer can be industrially produced easily. The polymerization degree is more preferably 200 to 4,500, further preferably 300 to 4,000, still further preferably 400 to 2,500, still more further preferably 500 to 2,500, even further preferably 600 to 2,500, even still further preferably 700 to 2,500, even still more further preferably 700 to 2,000, yet further preferably 800 to 1,800, and yet still further preferably 900 to 1,800.

[Production Method of Vinyl Alcohol-based polymer]

The production method of the vinyl alcohol-based polymer according to the present invention is not particularly limited, and the polymer can be produced, for example, by the following methods.

(1) The vinyl ester monomer and the monomer having an ionic group or an ester thereof are polymerized and then saponified to produce a vinyl alcohol-based polymer, and then the hydroxy group in the vinyl alcohol-based polymer is acetalized with an aldehyde to provide the vinyl alcohol-based polymer according to the present invention.
(2) The hydroxy group in a vinyl alcohol-based polymer is acetalized with an aldehyde, and then an aldehyde having an ionic group is acetalized to the vinyl alcohol-based polymer to impart the ionic group to the side chain of the vinyl alcohol-based polymer, resulting in the vinyl alcohol-based polymer according to the present invention.
(3) The vinyl ester monomer, the monomer having an ionic group or an ester thereof, and the monomer having a hydrophobic group are polymerized and then saponified to provide the vinyl alcohol-based polymer according to the present invention.
(4) The vinyl ester monomer and the monomer having a hydrophobic group are polymerized and then saponified to provide the vinyl alcohol-based polymer according to the present invention.

(Polymerization)

Examples of the production method (polymerization method) of the vinyl alcohol-based polymer include known methods, such as a bulk polymerization method, a solution polymerization method, a suspension polymerization method, and an emulsion polymerization method. Among these, a bulk polymerization method of polymerizing with no solvent and a solution polymerization method of polymerizing in various organic solvents are preferred from the standpoint of providing a polymer having a narrow molecular weight distribution. A bulk polymerization method is preferred from the standpoint of the non-use of a solvent or a dispersion medium that may cause a side reaction, such as chain transfer, and a solution polymerization is preferred from the standpoint of the control of the viscosity of the reaction liquid, the control of the polymerization rate, and the like.

Examples of the organic solvent used in the solution polymerization include an ester, such as methyl acetate and ethyl acetate; an aromatic hydrocarbon, such as toluene; and a lower alcohol, such as methanol and ethanol. Among

these, a lower alcohol is preferred, and methanol is more preferred, from the standpoint of the cost.

The amount of the organic solvent added may be selected corresponding to the polymerization degree of the target vinyl alcohol-based polymer in consideration of the chain transfer by the solvent. For example, the mass ratio of the organic solvent with respect to the vinyl ester-based monomer (organic solvent/vinyl ester-based monomer) is preferably in a range of 0.01 to 10. The mass ratio (organic solvent/vinyl ester-based monomer) is preferably 0.1 or more and is preferably 5 or less.

(Radical Polymerization Initiator)

The radical polymerization initiator (initiator) may be appropriately selected from known initiators, such as an azo-based initiator, a peroxide-based initiator, and a redox-based initiator.

Examples of the azo-based initiator include 2,2'-azobisisobutyronitrile, 2,2'-azobis(2,4-dimethylvaleronitrile), and 2,2'-azobis(4-methoxy-2,4-dimethylvaleronitrile) ("V-70", trade name, available from Fujifilm Wako Pure Chemical Corporation).

Examples of the peroxide-based initiator include a percarbonate compound, such as diisopropyl peroxydicarbonate, di-2-ethylhexyl peroxydicarbonate, and diethoxyethyl peroxydicarbonate; a perester compound, such as tert-butyl peroxyneodecanoate, $\alpha$-cumyl peroxyneodecanoate, and tert-butyl peroxyneodecanoate; acetyl cyclohexyl sulfonyl peroxide; diisobutyryl peroxide; and 2,4,4-trimethylpentyl-2-peroxyphenoxy acetate. The peroxide-based initiator may be formed by combining these compounds with potassium persulfate, ammonium persulfate, hydrogen peroxide, or the like.

Examples of the redox-based initiator include combinations of the peroxides described above with a reducing agent, such as sodium bisulfite, sodium bicarbonate, tartaric acid, L-ascorbic acid, and Rongalit.

Among these, an azo-based initiator is preferred, and 2,2'-azobisisobutyronitrile is more preferred from the standpoint of performing polymerization at a relatively low temperature and suppressing side-reaction.

The amount of the initiator added may vary depending on the polymerization catalyst and cannot be generally determined, and is appropriately selected depending on the polymerization rate. The amount of the initiator added is preferably 0.001 to 1.0 part by mass, more preferably 0.005 to 0.1 part by mass, and further preferably 0.008 to 0.05 part by mass, per 100 parts by mass of the raw material monomers of the vinyl alcohol-based polymer.

The polymerization temperature is preferably 0°C to 80°C. In the case where the polymerization temperature is 0°C or more, a sufficient polymerization rate can be obtained to enhance the productivity. In the case where the polymerization temperature is 80°C or less, the vinyl alcohol-based polymer that has a narrow molecular weight distribution can be obtained. From the standpoints, the polymerization temperature is preferably 10 to 80°C, more preferably 20 to 80°C, further preferably 40 to 70°C, and still further preferably 50 to 70°C.

At the time when the target polymerization degree is achieved, the polymerization reaction is terminated through quenching of the reaction system, addition of a polymerization terminator, or both of them.

In the case where the reaction system is quenched, it is preferred that a liquid medium having been cooled in advance is added to the reactor, while a method of allowing cooling water to flow in the jacket of the reactor may also be used.

(Saponification)

The saponification is preferably performed in the state where the vinyl alcohol-based polymer before saponification is dissolved in an alcohol or a water-containing alcohol.

Examples of the alcohol used in the saponification reaction include a lower alcohol, such as methanol and ethanol, in which methanol is preferred. The alcohol used in the saponification reaction may contain an additional solvent, for example, acetone, an ester, such as methyl acetate and ethyl acetate, and toluene, and the content of the additional solvent contained in the alcohol is preferably 10% by mass or less, and more preferably 5% by mass or less.

The concentration of the alcohol solution after the addition thereof is preferably 1.0 to 50% by mass, more preferably 5 to 45% by mass, and further preferably 8 to 40% by mass.

Examples of the catalyst used in the saponification include a hydroxide of an alkali metal, such as sodium hydroxide and potassium hydroxide, an alkali catalyst, such as sodium methylate, and an acidic catalyst, such as a mineral acid. Among these, sodium hydroxide is preferred from the standpoint of good handleability.

The temperature in the saponification reaction is preferably 20 to 70°C. In the case where the temperature is 20°C or more, the saponification reaction can be rapidly performed.

In the case where a gel product is deposited associated with the progress of the saponification reaction, the product is isolated at that time, and the product is pulverized, washed, and then dried to provide the vinyl alcohol-based polymer of the present invention.

(Acetalization)

The reaction of the vinyl alcohol-based polymer and the aldehyde (acetalization reaction) may be performed by known methods. For example, an aqueous method in which an aqueous solution of the vinyl alcohol-based polymer and the aldehyde are subjected to the acetalization reaction in the presence of an acid catalyst, and particles of the acetalized vinyl alcohol-based polymer are deposited; a solvent method in which the vinyl alcohol-based polymer is dispersed in an organic solvent, and subjected to the acetalization reaction with the aldehyde in the presence of an acid catalyst, and a poor solvent to the vinyl alcohol-based polymer, such as water, is mixed in the resulting reaction mixed liquid to deposit the acetalized vinyl alcohol-based polymer; and a method in which the vinyl alcohol-based polymer is dispersed in an organic solvent, and subjected to the acetalization reaction with the aldehyde in the presence of an acid catalyst, so as to provide the acetalized vinyl alcohol-based polymer.

The acid catalyst is not particularly limited, and examples thereof include an organic acid compound, such as acetic acid and p-toluenesulfonic acid; an inorganic acid compound, such as nitric acid, sulfuric acid, and hydrochloric acid; a gas exhibiting acidity in the form of an aqueous solution, such as carbon dioxide; and a solid catalyst, such as a cation exchange resin and a metal oxide.

[Aqueous Solution of Vinyl Alcohol-based Polymer]

The aqueous solution of the vinyl alcohol-based polymer according to the present invention contains the vinyl alcohol-based polymer and water.

The aqueous solution of the vinyl alcohol-based polymer according to the present invention contains the vinyl alcohol-based polymer, and thereby is capable of changing the viscosity largely.

The content rate of the vinyl alcohol-based polymer according to the present invention in the aqueous solution of the vinyl alcohol-based polymer is preferably 0.1 to 10% by mass, more preferably 0.5 to 5.0% by mass, further preferably 1.0 to 4.0% by mass, and still further preferably 1.3 to 3.0% by mass.

The content rate of water in the aqueous solution is preferably 80% by mass or more, and more preferably 90% by mass or more.

The aqueous solution may contain a pH modifier. The pH modifier is preferably those described above.

The preferred pH range of the aqueous solution may vary depending on the application, and is preferably 1 to 14, more preferably 3 to 12, and further preferably 4 to 10.

The aqueous solution may further contain an additive, such as a surfactant, various plasticizers, a defoaming agent, an ultraviolet ray absorbent, a filler, and a water resistant agent, in such a range that does not impair the substance of the present invention.

The aqueous solution of the vinyl alcohol-based polymer according to one embodiment of the present invention has a content rate of the vinyl alcohol-based polymer of 1 to 3% by mass and a pH or 7 or more at 20°C, and has an aqueous solution viscosity at 20°C and a shear rate of 1 (1/s) of 20 to 1,000,000 cp.

The aqueous solution of the vinyl alcohol-based polymer according to another embodiment of the present invention has a content rate of the vinyl alcohol-based polymer of 1 to 3% by mass and a pH or less than 7 at 20°C, and has an aqueous solution viscosity at 20°C and a shear rate of 1 (1/s) of 20 to 1,000,000 cp.

[Coating Material and Cement Admixture]

The coating material according to the present invention contains the vinyl alcohol-based polymer and water. The cement admixture according to the present invention contains the vinyl alcohol-based polymer and water.

The coating material according to the present invention may further contain an additional component depending on necessity in addition to the vinyl alcohol-based polymer and water. The additional component is not particularly limited, and examples thereof include an aqueous emulsion resin, a pigment, a curing catalyst, a crosslinking agent, a filler, a defoaming agent, a matting agent, a crosslinking reaction catalyst, an antiskinning agent, a dispersant, a wetting agent, a surfactant, a light stabilizer, a fungicide, an algaecide, an anti-yellowing agent, a reducing agent, an ultraviolet ray absorbent, a freezing stabilizer, an antioxidant, a film-forming aid, an organic solvent, a rust-preventing agent, a plasticizer, an antistatic agent, a lubricant, a deodorizer, an antiseptic, and a static charge modifier. One kind thereof may be used alone, or two or more kinds thereof may be used in combination.

The content of the vinyl alcohol-based polymer may be optionally set depending on the necessary properties of the coating material, and is preferably 0.001 to 10% by mass while not particularly limited. The content of the pigment is not particularly limited, and the mass proportion of the pigment with respect to the resin solid content of the coating material (PWC) is preferably 1 to 70% by mass.

The coating material according to the present invention can be coated through a preferred method depending on the application thereof, the material of the coating target, and the like. The coating method is not particularly limited, and

examples thereof include a flow coating method, a spray coating method, a brush coating method, a flexo coating method, a dip coating method, a spin coating method, a roll coating method, a casting method, a screen printing method, and a gravure coating method. After coating on a prescribed coating target, the coating material is dried to remove volatile components, thereby obtaining a coating film. At this time, an ultraviolet ray irradiation treatment, a heating treatment at a temperature of approximately 40 to 120°C, and the like may also be performed.

The coating target is not particularly limited, as long as being capable of forming a coating film on the surface thereof, and may be any of an inorganic base material and an organic base material. The material of the base material is not particularly limited, and examples thereof include an organic base material, such as a natural resin and a synthetic resin; and an inorganic base material, such as ceramics, metal, glass, stone, concrete, and cement. One kind thereof may be used alone, or two or more kinds thereof may be used in combination.

## Examples

The present invention is described in more detail with reference to examples below, but the present invention is not limited to the examples. In Examples and Comparative Example, "%" and "part" mean "% by mass" and "part by mas", respectively, unless otherwise indicated.

### [Synthesis Example 1]

#### (Polymerization Step)

In a reactor equipped with a reflux condenser, a stirrer, a thermometer, a nitrogen introducing tube, a charging port for a post-addition liquid, and a pump, 640 parts by mass of vinyl acetate, 254 parts by mass of methanol, and 1.05 parts by mass of methyl acrylate were charged to form a mixed liquid. The system was purged with nitrogen while stirring the mixed liquid. Separately therefrom, a methanol solution of methyl acrylate (concentration: 20% by mass) was prepared as a successive addition solution of a comonomer, and bubbled with nitrogen for 30 minutes. The reactor was started to heat, and at the time when the temperature reached 60°C, 0.06 part by mass of 2,2'-azobis(isobutyronitrile) (AIBN) was added to start polymerization. During the polymerization reaction proceeded, the methanol solution of methyl acrylate prepared above was added in a dropwise manner to the system, so as to regulate the monomer composition (i.e., the molar ratio of vinyl acetate and methyl acrylate) in the polymerization solution to the constant value. At the time when the polymerization degree of vinyl acetate reached 30% by mol, the polymerization was terminated.

#### (Saponification Step)

Subsequently, the unreacted vinyl acetate monomer was removed under reduced pressure to prepare a methanol solution of polyvinyl acetate (PVAc). Methanol was added to the resulting PVAc solution to regulate the concentration to 10% by mass. Subsequently, while retaining the temperature to 60°C, a methanol solution of sodium hydroxide having a concentration of 10% by mass was added to make a proportion of sodium hydroxide of 10 mmol per 1 mol of the vinyl acetate monomer unit in the copolymer, and the saponification reaction was performed for 2 hours.

#### (Post-treatment Step)

Thereafter, after cooling to room temperature (20°C), a product in the form of white solid was obtained through filtration, to which 900 parts by mass of methanol and 100 parts by mass of water were added, and a sodium hydroxide aqueous solution was added in an amount making a proportion thereof of 3 mol per 1 mol of the methyl acrylate unit in the copolymer, and the mixture was stirred for 2 hours at a temperature retained to 60°C. A white solid matter was obtained through filtration, to which 1,000 parts by mass of methanol was added, and allowed to stand for 1 hour for washing. A white solid matter was obtained through filtration, to which 1,000 parts by mass of methanol and 15 parts by mass of acetic acid were added, and allowed to stand for 3 hours for washing. A white solid matter was obtained through filtration, to which 1,000 parts by mass of methanol was added, and allowed to stand for 3 hours for washing. The aforementioned washing operation was repeated twice, and then a product was obtained through centrifugal deliquoring, and dried in a dryer at 40°C and 1.3 Pa for 20 hours to provide "PVOH-A" as the vinyl alcohol-based polymer (a).

### (Synthesis Example 2)

#### (Polymerization Step)

In a reactor equipped with a reflux condenser, a stirrer, a thermometer, a nitrogen introducing tube, a charging

port for a post-addition liquid, and a pump, 640 parts by mass of vinyl acetate, 243 parts by mass of methanol, and 0.34 parts by mass of itaconic acid were charged to form a mixed liquid. The system was purged with nitrogen while stirring the mixed polymerization liquid, which was then heated, and at the time when the temperature reached 60°C, 0.1 part by mass of 2,2'-azobis(isobutyronitrile) (AIBN) was added to start polymerization. From the start of polymerization, a 5% by mass methanol solution of itaconic acid was added in a dropwise manner to allow the polymerization to proceed while analyzing the concentration of the vinyl alcohol-based polymer in the polymerization system. 68 parts by mass of the 5% by mass methanol solution of itaconic acid was added in a dropwise manner at a substantially constant rate over the period of from the start of polymerization to 215 minutes, and then the polymerization was terminated by cooling to room temperature (20°C).

(Saponification Step)

Subsequently, the unreacted vinyl acetate monomer was removed under reduced pressure to prepare a methanol solution of polyvinyl acetate (PVAc). Methanol was added to the resulting PVAc solution to regulate the concentration of 35% by mass, then 15.7 parts by mass of an alkali solution (a 12% by mass methanol solution of NaOH) and 31.9 parts by mass of methanol were added to 286 parts by mass of the PVAc solution, and saponification was performed at 40°C. Specifically, the saponification reaction was performed in such a manner that a product gelled after adding the alkali solution was pulverized with a pulverizer, and allowed to stand at 40°C for 1 hour.

(Post-treatment Step)

Thereafter, after cooling to room temperature (20°C), 200 parts by mass of methyl acetate for neutralizing the remaining alkali. After confirming the completion of neutralization with a phenolphthalein indicator, a white solid matter was obtained through filtration, to which 1,000 parts by mass of methanol was added, and allowed to stand at room temperature for 3 hours for washing. The aforementioned washing operation was repeated three times, and then a product was obtained through centrifugal deliquoring, and dried in a dryer at 40°C and 1.3 Pa for 20 hours to provide "PVOH-B" as the vinyl alcohol-based polymer (a).

(Synthesis Example 3)

In a three-neck flask equipped with a reflux condenser and a thermometer, at room temperature (20°C), 30.0 parts by mass of methanol and 0.5 part by mass of dodecanal were added, to which 10 parts by mass of PVOH-A obtained in Synthesis Example 1 was added over 1 minute under stirring with a mechanical stirrer. 0.4 part by mass of p-toluenesulfonic acid was added to the reaction solution, and after heating to 65°C, the reaction was performed for 5 hours. 0.3 part by mass of an 8 mol/L sodium hydroxide aqueous solution was added, and the reaction was performed at 65°C for 2 hours. A product in the form of white solid was obtained through filtration, to which 100 parts by mass of methanol was added, and washed through stirring. The aforementioned washing operation was repeated three times, and then the product obtained through filtration was dried in a dryer at 40°C and 1.3 Pa for 20 hours to provide "PVOH-C" as the vinyl alcohol-based polymer (a).

(Synthesis Example 4)

In a three-neck flask equipped with a reflux condenser and a thermometer, at room temperature (20°C), 40.0 parts by mass of methanol and 2.9 parts by mass of sodium benzaldehydesulfonate were added, to which 10 parts by mass of a commercially available vinyl alcohol-based polymer (Product name 28-98, available from Kuraray Co., Ltd.) was added over 1 minute under stirring with a mechanical stirrer. 1.4 parts by mass of p-toluenesulfonic acid was added to the reaction solution, and after heating to 65°C, the reaction was performed for 5 hours. 0.9 part by mass of an 8 mol/L sodium hydroxide aqueous solution was added, and the reaction was performed at 65°C for 2 hours. A product in the form of white solid was obtained through filtration, to which 100 parts by mass of methanol was added, and washed through stirring. The aforementioned washing operation was repeated three times, and then the product obtained through filtration was dried in a dryer at 40°C and 1.3 Pa for 20 hours to provide "PVOH-D" as the vinyl alcohol-based polymer (a).

<Evaluation>

The vinyl alcohol-based polymers PVOH-A and PVOH-B obtained in Synthesis Examples 1 and 2 were measured in the following manner. The results are shown in Table 1.

<Modification Amount>

The modification amount of the comonomer of the vinyl alcohol-based polymers obtained in Synthesis Examples 1 and 2 can be obtained, for example, through $^1$H-NMR, and for example, the modification amount can be obtained by measuring the vinyl ester polymer as the precursor of the vinyl alcohol-based polymer through $^1$H-NMR. In Synthesis Example 1, the vinyl ester polymer (0.05 g) as the precursor of PVOH-A was dissolved in chloroform-d (0.95 g), and measured through 500 MHz $^1$H-NMR. The modification amount was calculated from the integrated values of the peak (4.7-5.1 ppm) derived from the main chain methine protons of the vinyl ester monomer unit and the peak (3.6-3.7 ppm) derived from the side chain methyl group of methyl acrylate. In Synthesis Example 2, the vinyl ester polymer (0.05 g) as the precursor of PVOH-B was dissolved in dimethyl sulfoxide-d6 (0.95 g), and measured through 500 MHz $^1$H-NMR. The modification amount was calculated from the integrated values of the peak (4.5-5.0 ppm) derived from the main chain methine protons of the vinyl ester monomer unit and the peak (3.0-3.2 ppm) derived from the side chain methylene group of itaconic acid. The modification amount herein corresponds to the content of the constitutional unit of the comonomer with respect to all the constitutional units constituting the vinyl alcohol-based polymer (a). The NMR analysis may be performed by combining measurements with various temperature conditions and various nuclear species, and measurements using additives.

<Content rate of Vinyl Ester Monomer Unit>

The content rate of the vinyl ester monomer unit of the vinyl alcohol-based polymers obtained in Synthesis Examples 1 and 2 can be obtained, for example, through $^1$H-NMR. The vinyl alcohol-based polymer (0.05 g) obtained in Synthesis Example 1 or 2 was dissolved in dimethyl sulfoxide-d6 (0.95 g), and measured through 500 MHz $^1$H-NMR. The content rate of the vinyl ester monomer unit with respect to all the constitutional unit constituting the vinyl alcohol-based polymer (a) was obtained from the resulting $^1$H-NMR spectrum by using the peak (1.9-2.0 ppm) derived from the methyl protons of the side chain of the vinyl ester monomer unit. The NMR analysis may be performed by combining measurements with various temperature conditions and various nuclear species, and measurements using additives.

<Polymerization Degree>

The viscosity average polymerization degree is measured according to JIS K6726-1994. The vinyl alcohol-based polymer was again saponified and purified, and then the polymerization degree was obtained from the limiting viscosity ($\eta$) (unit: dL/g) measured in water at 30°C.

[Table 1]

Table 1

| Vinyl alcohol-based polymer(a) | Comonomer species | Modification amount (% by mol) | Polymerization degree (-) | Content rate of vinyl ester monomer unit (% hv mol) |
|---|---|---|---|---|
| PVOH-A | methyl acrylate | 5.0 | 1500 | 0.3 |
| PVOH-B | itaconic acid | 1.2 | 1700 | 5.0 |

(Example 1)

In a three-neck flask equipped with a reflux condenser and a thermometer, at room temperature (20°C), 56.7 parts by mass of methanol and 0.6 part by mass of dodecanal were added, to which 10 parts by mass of PVOH-A obtained in Synthesis Example 1 was added over 1 minute under stirring with a mechanical stirrer. 1.3 parts by mass of p-toluenesulfonic acid was added to the reaction solution, and after heating to 65°C, the reaction was performed for 5 hours. 1.7 parts by mass of an 8 mol/L sodium hydroxide aqueous solution was added, and the reaction was performed at 65°C for 2 hours. A product in the form of white solid was obtained through filtration, to which 100 parts by mass of methanol was added, and washed through stirring. The aforementioned washing operation was repeated three times, and then the product obtained through filtration was dried in a dryer at 40°C and 1.3 Pa for 20 hours to provide "PVOH-1" as the vinyl alcohol-based polymer (X). The conditions are shown in Table 2.

(Example 2)

"PVOH-2" as the vinyl alcohol-based polymer (X) was obtained in the same manner as in Example 1 except that the amount of methanol added, the amount of dodecanal added, the amount of p-toluenesulfonic acid added, and the amount of the 8 mol/L sodium hydroxide aqueous solution added were changed. The conditions are shown in Table 2.

(Example 3)

"PVOH-3" as the vinyl alcohol-based polymer (X) was obtained in the same manner as in Example 1 except that the amount of methanol added, the addition of 0.8 part by mass of decanal instead of dodecanal, the amount of the 8 mol/L sodium hydroxide aqueous solution added were changed. The conditions are shown in Table 2.

(Example 4)

"PVOH-4" as the vinyl alcohol-based polymer (X) was obtained in the same manner as in Example 3 except that the amount of dodecanal added was changed. The conditions are shown in Table 2.

(Example 5)

"PVOH-5" as the vinyl alcohol-based polymer (X) was obtained in the same manner as in Example 2 except that the amount of methanol added and the addition of 1.6 parts by mass of hexanal instead of dodecanal were changed. The conditions are shown in Table 2.

(Example 6)

"PVOH-6" as the vinyl alcohol-based polymer (X) was obtained in the same manner as in Example 1 except that the amount of dodecanal added, the addition of PVOH-B obtained in Synthesis Example 2 instead of PVOH-A, the amount of p-toluenesulfonic acid added, and the amount of the 8 mol/L sodium hydroxide aqueous solution added were changed. The conditions are shown in Table 2.

(Example 7)

"PVOH-7" as the vinyl alcohol-based polymer (X) was obtained in the same manner as in Example 1 except that the amount of methanol added, the addition of 0.9 part by mass of sodium benzaldehydesulfonate instead of dodecanal, the addition of PVOH-C obtained in Synthesis Example 3 instead of PVOH-A, the amount of p-toluenesulfonic acid added, and the amount of the 8 mol/L sodium hydroxide aqueous solution added were changed. The conditions are shown in Table 2.

(Example 8)

"PVOH-8" as the vinyl alcohol-based polymer (X) was obtained in the same manner as in Example 5 except that the amount of hexanal added was changed. The conditions are shown in Table 2.

(Comparative Example 1)

In a three-neck flask equipped with a reflux condenser and a thermometer, at room temperature (20°C), 578.0 parts by mass of water was added, to which 10 parts by mass of a commercially available vinyl alcohol-based polymer (Product name 28-98, available from Kuraray Co., Ltd.) was added over 1 minute under stirring with a mechanical stirrer. The mixture was dissolved by heating to 90°C and stirring for 1 hour. The solution was allowed to cool spontaneously to 40°C, to which 0.6 part by mass of decanal and 1.2 parts by mass of hydrochloric acid having a concentration of 20% were added, and the reaction was performed at 40°C for 3 hours. 0.3 part by mass of an 8 mol/L sodium hydroxide aqueous solution was added, and the reaction was performed at 65°C for 2 hours to provide an aqueous solution of "PVOH-9" as the vinyl alcohol-based polymer (X).

(Comparative Example 2)

"PVOH-A" obtained in Synthesis Example 1 was designated as "PVOH-10" as the vinyl alcohol-based polymer (X).

(Comparative Example 3)

"PVOH-11" as the vinyl alcohol-based polymer (X) was obtained in the same manner as in Example 1 except that the amount of dodecanal added and the amount of the 8 mol/L sodium hydroxide aqueous solution added were changed. The conditions are shown in Table 2.

(Comparative Example 4)

"PVOH-12" as the vinyl alcohol-based polymer (X) was obtained in the same manner as in Example 1 except that the amount of dodecanal added, the addition of PVOH-D obtained in Synthesis Example 4 instead of PVOH-A, the amount of p-toluenesulfonic acid added, and the amount of the 8 mol/L sodium hydroxide aqueous solution added were changed. The conditions are shown in Table 2.

[Table 2]

Table 2

| Vinyl alcohol-based polymer (X) | Synthesis condition | | | | | | |
|---|---|---|---|---|---|---|---|
| | Methanol | Aldehyde | | Vinyl alcohol-based polymer (a) | | p-Toluenesulfonic acid | 8 mol/L Sodium hydroxide aqueous solution |
| | Addition amount (part by mass) | Kind | Addition amount (part by mass) | Kind | Addition amount (part by mass) | Addition amount (part by mass) | Addition amount (part by mass) |
| PVOH-1 | 56.7 | dodecanal | 0.6 | PVOH-A | 10 | 1.3 | 1.7 |
| PVOH-2 | 30.0 | dodecanal | 0.8 | PVOH-A | 10 | 0.4 | 0.3 |
| PVOH-3 | 56.7 | decanal | 0.8 | PVOH-A | 10 | 1.3 | 0.9 |
| PVOH-4 | 56.7 | decanal | 2.0 | PVOH-A | 10 | 1.3 | 0.9 |
| PVOH-5 | 56.7 | hexanal | 1.6 | PVOH-A | 10 | 0.4 | 0.3 |
| PVOH-6 | 56.7 | dodecanal | 1.0 | PVOH-B | 10 | 1.9 | 5.9 |
| PVOH-7 | 40.0 | sodium benzaldehydesulfonate | 0.9 | PVOH-C | 10 | 1.6 | 1.3 |
| PVOH-8 | 56.7 | hexanal | 0.8 | PVOH-A | 10 | 0.4 | 0.3 |
| PVOH-9 | - | decanal | 0.6 | 28-98 | 10 | - | 0.3 |
| PVOH-11 | 56.7 | dodecanal | 2.8 | PVOH-A | 10 | 1.3 | 0.9 |
| PVOH-12 | 56.7 | dodecanal | 0.7 | PVOH-D | 10 | 1.1 | 0.8 |

<Evaluation>

The vinyl alcohol-based polymers (X) obtained in Examples and Comparative Examples were evaluated in the following manner. The results are shown in Tables 3 and 4.

<Content rates of Constitutional Units>

The vinyl alcohol-based polymer (0.05 g) obtained in Examples and Comparative Examples was dissolved in dimethyl sulfoxide-d6 (0.95 g), and measured through 500 MHz $^{1}$H-NMR. The content rates of the constitutional unit (A) having a lactone ring, the constitutional unit (B) having an ionic group, the constitutional unit (C) having a hydrophobic group, the vinyl alcohol monomer unit, and the vinyl ester monomer unit were calculated from the resulting $^{1}$H-NMR

spectrum. In the present invention, the "constitutional unit" means a repeating unit having a functional group, and the constitutional unit having a lactone ring, the ionic group introduced through acetalization, and the hydrophobic group each are designated as "one unit". In the case where a dicarboxylic acid-based monomer is used, in which one of the carboxy groups forms a lactone ring, and the other forms an ionic group, the unit is calculated in duplicate for the constitutional unit (A) having a lactone ring and the constitutional unit (B) having an ionic group. For the lactone ring, for example, one unit of the monomer unit having a carboxy group and one unit of the vinyl alcohol monomer unit adjacent thereto are reacted to form a lactone ring. For the acetalized structure, one unit of the acetal unit and two units of the vinyl alcohol monomer units are reacted to form one unit of the acetalized structure. In consideration of these points, in the vinyl alcohol-based polymer units as the denominator, the lactone ring and the acetalized structure each are calculated as "two units".

<Polymerization Degree>

The measured value of the vinyl alcohol-based polymer (a) was used.

<Preparation Method of Aqueous Solution>

Ion exchanged water was added to the vinyl alcohol-based polymer (X) or the aqueous solution of the vinyl alcohol-based polymer (X), and an 8 mol/L sodium hydroxide aqueous solution in an amount of 2/3 molar amount of the constitutional unit (A) having a lactone ring constituting the vinyl alcohol-based polymer was added thereto, which were dissolved at 95°C by stirring to prepare an aqueous solution having a content rate of the vinyl alcohol-based polymer (X) of 1.6% by mass. The 1.6% by mass vinyl alcohol-based polymer aqueous solution was spontaneously cooled to 20°C, to which ion exchanged water and a 20% by mass citric acid aqueous solution or a 2 mol/L sodium hydroxide aqueous solution were added under stirring the aqueous solution, so as to prepare a 1.5% by mass aqueous solution having a pH of 4 or 10 at 20°C. The solution was further stirred at 20°C for 5 minutes.

The pH was measured with a commercially available pH meter (Compact pH Meter LAQUAtwin, available from Horiba, Ltd.). At the time when the 8 mol/L sodium hydroxide aqueous solution in an amount of 2/3 molar amount of the constitutional unit (A) having a lactone ring was added and dissolved at 95°C, the case of failing to dissolve homogeneously was designated as insoluble, and the pH was not regulated.

The content rate of the vinyl alcohol-based polymer (X) was calculated according to the following expression.

Content rate (% by mass) = (amount of vinyl alcohol-based polymer (X) added (g)/weight of entire aqueous solution (g)) $\times$ 100

<Viscosities X and Y>

The aqueous solution was prepared to have a pH of 4 according to the aforementioned method, and then after 5 minutes, the 1.5% by mass aqueous solution (for the viscosity X) was measured for the viscosity X at a shear rate of 1.0 (1/s) and a measurement time of 182 seconds with a rotational rheometer (Rheometer Discovery HR-2, available from TA Instruments-Waters LLC) under the following measurement condition.

The aqueous solution was prepared to have a pH of 10 according to the aforementioned method, and then after 5 minutes, the 1.5% by mass aqueous solution (for the viscosity Y) was measured for the viscosity Y at a shear rate of 1.0 (1/s) and a measurement time of 182 seconds with a rotational rheometer (Rheometer Discovery HR-2, available from TA Instruments-Waters LLC) under the following measurement condition.

<Measurement Condition>

Jig: Stainless Steel Peltier cone Geometries with Solvent Trap (HRx0, made of stainless steel, 40 mm, 1° cone)

Measurement temperature: 20°C
Measurement time: 300 seconds
Shear rate: 1.0 (1/s)

The viscosity Y was scored by the following standard. A larger viscosity Y means a higher viscosity exhibited at a low concentration, and thus means an excellent thickening capability.

5 points: 10,000 cp or more
4 points: 5,000 cp or more and less than 10,000 cp
3 points: 1,000 cp or more and less than 5,000 cp

2 points: 400 cp or more and less than 1,000 cp
1 point: less than 400 cp

<Viscosity Ratio Y/X>

The viscosity ratio Y/X of the viscosities X and Y measured by the aforementioned method was scored by the following standard. A larger viscosity ratio Y/X means that the viscosity can be readily changed largely, and thus means an excellent viscosity changing capability.

5 points: 50.0 or more
4 points: 10.0 or more and less than 50.0
3 points: 5.0 or more and less than 10.0
2 points: 1.5 or more and less than 5.0
1 point: less than 1.5

<Viscosity Z>

The aqueous solution prepared to have a pH of 10 according to the aforementioned method was measured for the viscosity with a rotational rheometer (Rheometer Discovery HR-2, available from TA Instruments-Waters LLC) under the following measurement condition. After keeping a shear rate of 0.01 (1/s) for 30 seconds, an operation of keeping a shear rate of 0.1 (1/s) for 30 seconds intermittently was performed in sequence from the smaller side of the following 6-step shear rates (6 steps × 30 seconds = 180 seconds), and the viscosities at the respective shear rates were measured. The viscosity Z at the time when 28 seconds elapsed after switching to a shear rate of 100 (1/s) is shown in Table 4.

<Measurement Condition>

Jig: Stainless Steel Peltier cone Geometries with Solvent Trap (HRx0, made of stainless steel, 40 mm, 1° cone)

Measurement temperature: 20°C
Measurement time: 180 seconds
Shear rate: 0.01, 0.1, 1, 10, 100, 1,000 (1/s)

<Viscosity Ratio Y/Z>

The viscosity ratio Y/Z of the viscosities Y and Z measured by the aforementioned method was scored by the following standard. A larger viscosity ratio Y/Z means that the viscosity can be lowered at the shear rate in delivering, and thus means an excellent solution delivering capability.

5 points: 10.0 or more
4 points: 5.0 or more and less than 10.0
3 points: 2.0 or more and less than 5.0
2 points: 1.5 or more and less than 2.0
1 point: less than 1.5

<Overall Evaluation of Thickener>

The sum of the three evaluation items (i.e., the viscosity Y and the viscosity ratios Y/X and Y/Z) is designated as the overall evaluation of the performance of the vinyl alcohol-based polymer. The results are shown in Table 4.

<Viscosity Changing Capability>

The aqueous solution having been measured for the viscosity X was stirred at 20°C, to which a 2 mol/L sodium hydroxide aqueous solution was added to regulate the pH to 10, and then after stirring at 20°C for 5 minutes, the viscosity W at 1.0 (1/s) was measured under the same measurement condition as in the viscosity X.

The case where the viscosity showed a viscosity 4.0 times or more the viscosity X was evaluated as A, the case where the viscosity showed a viscosity 2.5 times or more and less than 4.0 times was evaluated as B, the case where the viscosity showed a viscosity 1.5 times or more and less than 2.5 times was evaluated as C, and the case where the viscosity showed a viscosity less than 1.5 times was evaluated as D. The results are shown in Table 4.

[Table 3]

Table 3

| | Vinyl alcohol-based polymer (X) | | | | |
|---|---|---|---|---|---|
| | Kind | Constitutional unit (A) having lactone ring | Constitutional unit (B) having ionic group | | |
| | | Content rate (a) (% by mol) | Modification species | Functional group | Content rate (b) (% by mol) |
| Example 1 | PVOH-1 | 2.8 | acrylic acid | carboxy group | 2.2 |
| Example 2 | PVOH-2 | 4.9 | acrylic acid | carboxy group | 0.1 |
| Example 3 | PVOH-3 | 4.9 | acrylic acid | carboxy group | 0.1 |
| Example 4 | PVOH-4 | 4.9 | acrylic acid | carboxy group | 0.1 |
| Example 5 | PVOH-5 | 4.9 | acrylic acid | carboxy group | 0.1 |
| Example 6 | PVOH-6 | 0.1 | itaconic acid | carboxy group | 1.2 |
| Example 7 | PVOH-7 | 1.3 | acrylic acid/ sodium benzaldehydesulfonate | carboxy group/ sulfo group | 3.70/1.48 |
| Example 8 | PVOH-8 | 4.9 | acrylic acid | carboxy group | 0.1 |
| Comparative Example 1 | PVOH-9 | - | - | - | 0.0 |
| Comparative Example 2 | PVOH-10 | 4.9 | acrylic acid | carboxy group | 0.1 |
| Comparative Example 3 | PVOH-11 | 1.2 | acrylic acid | carboxy group | 3.8 |
| Comparative Example 4 | PVOH-12 | - | sodium benzaldehydesulfonate | sulfo group | 3.7 |

Table 3 (continued)

| | Vinyl alcohol-based polymer (X) | | | | | | | |
|---|---|---|---|---|---|---|---|---|
| | Kind | Constitutional unit (C) having hydrophobic group | | | Vinyl alcohol monomer unit | Vinyl ester monomer unit | Polymerization degree | Calculated value by expression 3 |
| | | Modification species | Content rate (c) (% by mol) | Number of carbon atoms (d) | Content rate (% by mol) | Content rate (% by mol) | | |
| Example 1 | PVOH-1 | dodecanal | 1.3 | 12 | 89.5 | 0.1 | 1500 | 21.1 |
| Example 2 | PVOH-2 | dodecanal | 1.7 | 12 | 86.6 | 0.1 | 1500 | 27.5 |
| Example 3 | PVOH-3 | decanal | 2.0 | 10 | 86.0 | 0.1 | 1500 | 19.6 |
| Example 4 | PVOH-4 | decanal | 5.1 | 10 | 79.9 | 0.1 | 1500 | 49.5 |
| Example 5 | PVOH-5 | hexanal | 6.0 | 6 | 78.0 | 0.1 | 1500 | 10.8 |
| Example 6 | PVOH-6 | dodecanal | 1.3 | 12 | 95.7 | 0.5 | 1700 | 40.5 |
| Example 7 | PVOH-7 | dodecanal | 1.1 | 12 | 88.5 | 0.1 | 1500 | 13.4 |
| Example 8 | PVOH-8 | hexanal | 2.9 | 6 | 84.2 | 0.1 | 1500 | 5.2 |
| Comparative Example 1 | PVOH-9 | decanal | 1.6 | 10 | 96.3 | 0.5 | 1700 | - |
| Comparative Example 2 | PVOH-10 | - | - | - | 89.8 | 0.3 | 1500 | 0.0 |
| Comparative Example 3 | PVOH-11 | dodecanal | 5.9 | 12 | 81.9 | 0.1 | 1500 | 95.6 |
| Comparative Example 4 | PVOH-12 | dodecanal | 1.7 | 12 | 89.2 | 0.1 | 1700 | 36.1 |

[Table 4]

Table 4

| | Vinyl alcohol-based polymer (X) | Evaluation of capabilities | | | | |
|---|---|---|---|---|---|---|
| | Kind | Viscosity X (cp) | Viscosity Y | | Viscosity ratio (Y/X) | |
| | | | (cp) | Evaluation | Value | Evaluation |
| Example 1 | PVOH-1 | 158 | 37,665 | 5 | 238.4 | 5 |
| Example 2 | PVOH-2 | 2,633 | 80,818 | 5 | 30.7 | 4 |
| Example 3 | PVOH-3 | 738 | 18,273 | 5 | 24.8 | 4 |
| Example 4 | PVOH-4 | 5,468 | 41,752 | 5 | 7.6 | 3 |
| Example 5 | PVOH-5 | 228 | 471 | 2 | 2.1 | 2 |
| Example 6 | PVOH-6 | 506 | 6,823 | 4 | 13.5 | 4 |
| Example 7 | PVOH-7 | 294 | 1,105 | 3 | 3.8 | 2 |
| Example 8 | PVOH- 8 | 52 | 130 | 1 | 2.5 | 2 |
| Comparative Example 1 | PVOH-9 | 120 | 172 | 1 | 1.4 | 1 |
| Comparative Example 2 | PVOH-10 | 47 | 12 | 1 | 0.3 | 1 |
| Comparative Example 3 | PVOH-11 | insoluble | insoluble | - | - | - |
| Comparative Example 4 | PVOH-12 | 508 | 663 | 2 | 1.3 | 1 |

Table 4 (continued)

| | Vinyl alcohol-based polymer (X) | Evaluation of capabilities | | | | |
|---|---|---|---|---|---|---|
| | Kind | Viscosity Z (cp) | Viscosity ratio (Y/Z) | | Overall evaluation | Viscosity changing capability |
| | | | Value | Evaluation | | |
| Example 1 | PVOH-1 | 1425 | 26.4 | 5 | 15 | A |
| Example 2 | PVOH-2 | 1706 | 47.4 | 5 | 14 | A |
| Example 3 | PVOH-3 | 2484 | 7.4 | 4 | 13 | A |
| Example 4 | PVOH-4 | 1410 | 29.6 | 5 | 13 | B |
| Example 5 | PVOH-5 | 406 | 1.2 | 1 | 5 | B |
| Example 6 | PVOH-6 | 1364 | 5.0 | 4 | 12 | B |
| Example 7 | PVOH-7 | 690 | 1.6 | 2 | 7 | B |
| Example 8 | PVOH- 8 | 15 | 8.7 | 4 | 7 | C |
| Comparative Example 1 | PVOH-9 | 115 | 1.5 | 2 | 4 | D |
| Comparative Example 2 | PVOH-10 | 11 | 1.1 | 1 | 3 | D |
| Comparative Example 3 | PVOH-11 | - | - | - | - | - |
| Comparative Example 4 | PVOH-12 | 511 | 1.3 | 1 | 4 | D |

## Claims

**1.** A vinyl alcohol-based polymer having

an aqueous solution viscosity X (cp) at 20°C and a shear rate of 1 (1/s) of an aqueous solution in an aqueous solution state having a content rate of the vinyl alcohol-based polymer of 1.5% by mass and a pH of 4 at 20°C, and an aqueous solution viscosity Y (cp) at 20°C and a shear rate of 1 (1/s) of an aqueous solution in an aqueous solution state having a content rate of the vinyl alcohol-based polymer of 1.5% by mass and a pH of 10 at 20°C, that satisfy the following expression (1):

$$1.5 < Y/X < 1{,}500 \qquad (1)$$

**2.** The vinyl alcohol-based polymer according to claim 1, wherein the aqueous solution viscosity Y is 20 cp or more.

**3.** The vinyl alcohol-based polymer according to claim 1 or 2, wherein the aqueous solution viscosity Y (cp) and an aqueous solution viscosity Z (cp) at 20°C and a shear rate of 100 (1/s) of an aqueous solution in an aqueous solution state having a content rate of the vinyl alcohol-based polymer of 1.5% by mass and a pH of 10 at 20°C satisfy the following expression (2):

$$1.5 < Y/Z < 100 \qquad (2)$$

**4.** The vinyl alcohol-based polymer according to any one of claims 1 to 3, wherein the vinyl alcohol-based polymer contains a constitutional unit (A) having a lactone ring.

**5.** The vinyl alcohol-based polymer according to any one of claims 1 to 4, wherein the vinyl alcohol-based polymer contains a constitutional unit (B) having an ionic group.

**6.** The vinyl alcohol-based polymer according to any one of claims 1 to 5, wherein the vinyl alcohol-based polymer contains a constitutional unit (C) having a hydrophobic group including a hydrocarbon having 3 or more carbon atoms.

**7.** The vinyl alcohol-based polymer according to any one of claims 1 to 3, wherein the vinyl alcohol-based polymer contains a constitutional unit (A) having a lactone ring, a constitutional unit (B) having an ionic group, and a constitutional unit (C) having a hydrophobic group including a hydrocarbon having 3 or more carbon atoms, and has a content rate (a) of the constitutional unit (A), a content rate (b) of the constitutional unit (B), and a content rate (c) of the constitutional unit (C), with respect to all constitutional units of the vinyl alcohol-based polymer, a number of carbon atoms (d) of the hydrophobic group in the constitutional unit (C), and a number of the ionic group (e) in the constitutional unit (B) that satisfy the following expression (3):

$$5 < (c\times(d-3)^2)/(a+b\times e) < 95 \qquad (3)$$

**8.** A vinyl alcohol-based polymer-containing aqueous solution comprising the vinyl alcohol-based polymer according to any one of claims 1 to 7.

**9.** The vinyl alcohol-based polymer-containing aqueous solution according to claim 8, wherein the vinyl alcohol-based polymer aqueous solution has a content rate of the vinyl alcohol-based polymer of 1 to 3% by mass and a pH of 7 or more at 20°C, and has an aqueous solution viscosity at a shear rate of 1 (1/s) at 20°C of 20 to 1,000,000 cp.

**10.** The vinyl alcohol-based polymer-containing aqueous solution according to claim 8, wherein the vinyl alcohol-based polymer aqueous solution has a content rate of the vinyl alcohol-based polymer of 1 to 3% by mass and a pH of less than 7 at 20°C, and has an aqueous solution viscosity at a shear rate of 1 (1/s) at 20°C of 20 to 100,000 cp.

**11.** A coating material comprising the vinyl alcohol-based polymer according to any one of claims 1 to 7.

**12.** A cement admixture comprising the vinyl alcohol-based polymer according to any one of claims 1 to 7.

**INTERNATIONAL SEARCH REPORT**

International application No.
**PCT/JP2024/015533**

**A. CLASSIFICATION OF SUBJECT MATTER**

***C08F 8/12***(2006.01)i; ***C04B 24/26***(2006.01)i; ***C08F 8/48***(2006.01)i; ***C08F 216/06***(2006.01)i; ***C09D 5/00***(2006.01)i; ***C09D 129/04***(2006.01)i
FI: C08F8/12; C04B24/26 B; C08F8/48; C08F216/06; C09D5/00 Z; C09D129/04

According to International Patent Classification (IPC) or to both national classification and IPC

**B. FIELDS SEARCHED**

Minimum documentation searched (classification system followed by classification symbols)

C08F8/12; C04B24/26; C08F8/48; C08F216/06; C09D5/00; C09D129/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/282239 A1 (JAPAN VAM & POVAL CO., LTD.) 12 January 2023 (2023-01-12) claims, examples | 1-12 |
| A | JP 2023-34384 A (KURARAY CO., LTD.) 13 March 2023 (2023-03-13) claims, examples | 1-12 |
| A | JP 2021-116386 A (KURARAY CO., LTD.) 10 August 2021 (2021-08-10) claims, examples | 1-12 |
| A | JP 2000-501136 A (E.I. DU PONT DE NEMOURS AND COMPANY) 02 February 2000 (2000-02-02) claims, examples | 1-12 |
| A | JP 2019-119891 A (KURARAY CO., LTD.) 22 July 2019 (2019-07-22) claims, examples | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/015533**

**C. DOCUMENTS CONSIDERED TO BE RELEVANT**

| Category* | Citation of document, with indication, where appropriate, of the relevant passages | Relevant to claim No. |
|---|---|---|
| A | JP 4-309509 A (DENKI KAGAKU KOGYO KK) 02 November 1992 (1992-11-02) claims, examples | 1-12 |
| A | JP 2008-143922 A (SEKISUI CHEM. CO., LTD.) 26 June 2008 (2008-06-26) claims, examples | 1-12 |

Form PCT/ISA/210 (second sheet) (July 2022)

**INTERNATIONAL SEARCH REPORT**
**Information on patent family members**

International application No.
**PCT/JP2024/015533**

| Patent document cited in search report | Publication date (day/month/year) | Patent family member(s) | Publication date (day/month/year) |
|---|---|---|---|
| WO 2023/282239 A1 | 12 January 2023 | CN 117597414 A<br>TW 202307028 A | |
| JP 2023-34384 A | 13 March 2023 | (Family: none) | |
| JP 2021-116386 A | 10 August 2021 | (Family: none) | |
| JP 2000-501136 A | 02 February 2000 | EP 863921 A1<br>claims, examples<br>KR 10-1999-0071716 A | |
| JP 2019-119891 A | 22 July 2019 | (Family: none) | |
| JP 4-309509 A | 02 November 1992 | (Family: none) | |
| JP 2008-143922 A | 26 June 2008 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008291120 A
- WO 2019189402 A